# DEMANDE DE BREVET EUROPEEN

(11) **EP 2 383 528 A1**
(43) Date de publication de la demande: **02.11.2011**
(21) Numéro de dépôt: 11305371.4
(22) Date de dépôt: 31.03.2011
(51) Int. Cl.: F24J 2/52, F24J 2/04, H01L 31/042, H01L 31/048

(54) **Installation solaire destinée à être posée sur une partie de la surface d'une structure support en pente**

(30) Priorité: 01.04.2010 FR 1001370
(71) Demandeur: Poujoulat, 79360 Granzay Gript (FR)
(72) Inventeur: Pierre, Jean-Luc, 79460 Magne (FR)
(74) Mandataire: Michelet, Alain

(57) **Abrégé**

L'installation solaire conforme à l'invention comporte des modules solaires (2) constitués chacun d'un panneau photovoltaïque ou thermique (6) en forme de plaque carrée ou rectangulaire, monté sur une embase métallique (7) comprenant une plaque support (9) découpée et pliée.

Les bordures latérales, supérieure et inférieure des plaques supports (9) sont adaptées pour permettre le recouvrement de deux modules (2) adjacents dans le sens de la pente et perpendiculairement au sens de la pente, cela de manière étanche aux eaux pluviales. D'autre part, les bordures supérieure, inférieure et latérales desdites plaques supports (9), destinées à former une partie du contour périphérique de l'installation, comportent des découpes et/ou pliages adaptés au matériau de recouvrement destiné à leur être associé, pour obtenir une étanchéité aux eaux pluviales.

En outre, la face de dessus de chacune desdites plaques supports (9) comporte des structures rapportées et soudées (13a, 13b) pour la fixation d'un panneau photovoltaïque ou thermique (6), et leur face de dessous comporte des moyens pour la fixation du module (2) sur la structure support en pente.

## Description

La présente invention concerne une installation solaire de type photovoltaïque ou thermique, destinée à être posé sur une partie de la surface d'une structure support en pente, en particulier une toiture de bâtiment (maison d'habitation ou autre).

Les installations solaires sont constituées de panneaux photovoltaïques ou thermiques, en forme de plaques carrées ou rectangulaires, associés à des moyens qui permettent leur montage de manière étanche sur la toiture support.

Très généralement, l'installation comporte une pluralité de panneaux juxtaposés qui couvrent une partie de la surface de la toiture, cette surface de panneaux étant bordée par un matériau de recouvrement (tuiles ou ardoises notamment) qui est posé sur le reste de la toiture.

Mais les moyens de montage correspondants, connus jusqu'à présent, sont relativement complexes (utilisation de plaques d'étanchéité rapportées, mise en oeuvre de profilés et de crochets de fixation rapportés), et ils nécessitent bien souvent des moyens complémentaires pour réaliser l'étanchéité entre le contour périphérique de la juxtaposition de panneaux et le matériau de recouvrement périphérique.

Par exemple, le document EP-1 170 806 décrit une installation solaire comprenant une pluralité de modules solaires juxtaposés. Ces modules solaires sont constitués chacun d'un panneau photovoltaïque monté sur une embase métallique comprenant une plaque support découpée et pliée, de forme générale rectangulaire.

Les bordures latérales de cette plaque support, qui sont destinées à être juxtaposées dans le sens de la pente, comportent des pliages complémentaires pour permettre leur recouvrement et obtenir un emboîtement étanche aux eaux pluviales.

Mais il n'est pas donné de précisions sur la manière dont sont associées entre elles les plaques supports dans le sens de la pente, ni sur la manière dont sont fixées ces plaques supports sur la charpente.

En outre, les bordures latérales des plaques supports qui forment une partie du contour périphérique de l'installation sont associées à des plaques complémentaires rapportées, positionnées sur les côtés et elles-mêmes associées à des bandes de mousse rapportées longitudinalement, qui assurent l'étanchéité.

Cela nécessite la gestion de nombreuses pièces différentes et complique le montage pour le poseur.

De plus, d'une manière générale, la mousse, utilisée pour l'étanchéité avec le matériau périphérique de recouvrement de toiture, a tendance à se dégrader dans le temps et n'a pas une longue durée de vie.

La présente invention a pour but de proposer une structure, préparée au préalable en usine, autorisant un montage simple, rapide et étanche aux eaux pluviales.

Pour cela, l'installation solaire conforme à l'invention comprend des modules solaires constitués chacun d'un panneau photovoltaïque ou thermique en forme de plaque carrée ou rectangulaire, lequel panneau, délimité par une bordure supérieure, une bordure inférieure et deux bordures latérales, est monté sur une embase métallique comprenant une plaque support découpée et pliée, de forme générale carrée ou rectangulaire délimitée par une bordure supérieure, une bordure inférieure et deux bordures latérales,
- lesdites bordures latérales desdites plaques supports de deux modules destinés à être juxtaposés perpendiculairement au sens de la pente comportant des pliages complémentaires pour permettre leur recouvrement et obtenir un emboîtement étanche aux eaux pluviales,
- lesdites bordures supérieure et inférieure des plaques supports de deux modules destinés à être juxtaposés dans le sens de la pente étant aptes à venir se recouvrir de manière étanche aux eaux pluviales,
- les bordures supérieure, inférieure et latérales desdites plaques supports, destinées à former une partie du contour périphérique de ladite installation, comportant des découpes et/ou pliages adaptés audit matériau de recouvrement destiné à leur être associé, pour obtenir une étanchéité aux eaux pluviales,
- la face de dessus de chacune desdites plaques supports comportant des structures rapportées et soudées, pour la fixation d'un panneau photovoltaïque ou thermique, et
- la face de dessous de chacune desdites plaques supports comportant des structures rapportées et soudées pour la fixation dudit module sur ladite structure support en pente.

Selon une forme de réalisation préférée, lesdites structures rapportées et soudées sur la face de dessus de chaque plaque support pour la fixation d'un panneau photovoltaïque ou thermique consistent en :
- deux rails latéraux disposés parallèlement aux bordures latérales de ladite plaque support, munis de moyens pour la réception des bordures latérales dudit panneau photovoltaïque ou thermique,
- une structure de butée, ménagée du côté de la bordure inférieure de ladite plaque support, pour constituer un appui pour la bordure inférieure dudit panneau, et
- une structure de verrouillage, ménagée du côté de la bordure supérieure de ladite plaque support, pour constituer une butée de blocage pour la bordure supérieure de ce panneau.

Les deux rails latéraux des plaques supports consistent alors avantageusement en des profilés métalliques soudés, comprenant chacun une aile inférieure de solidarisation avec ladite plaque, prolongée par une jambe à l'équerre dont la partie supérieure se prolonge elle-même par une structure à section en U dont l'ouverture est orientée en direction de l'autre rail, pour former des coulisses latérales permettant la réception des bordures latérales du panneau photovoltaïque ou thermique associé.

La structure de butée inférieure consiste avantageusement en au moins un tronçon de profilé dont la section est identique à celle des rails latéraux, lequel tronçon de profilé est soudé sur la face de dessus de la plaque support, l'ouverture de sa structure à section en U étant orientée de manière à permettre l'encastrement de la bordure inférieure du panneau associé.

De son côté, la structure de verrouillage supérieure consiste de préférence en un plot métallique soudé sur la face de dessus de la plaque support, lequel plot comporte un orifice taraudé apte à recevoir une vis de fixation d'un crochet rapporté venant coopérer avec la bordure supérieure du panneau photovoltaïque ou thermique associé, en vue d'assurer le verrouillage de ce dernier, une fois en position, logé dans les rails latéraux de réception et en appui contre la structure de butée inférieure.

Selon une autre particularité, les panneaux photovoltaïques ou thermiques sont équipés de profilés rapportés, encastrés sur leurs bordures latérales, supérieure et inférieure, lesquels profilés comportent une lèvre à section en L, formant coulisseau, en saillie vers l'extérieur, apte à venir s'emboîter par coulissement dans les rails latéraux de la plaque support, et éventuellement apte à coopérer avec la structure de butée inférieure et avec la structure de verrouillage supérieure.

Ces lèvres à section en L sont avantageusement ménagées à la base des profilés rapportés, sous le panneau associé, et dans l'encombrement du contour périphérique de ce dernier, de manière à masquer du mieux possible la fixation du montage.

Selon encore une autre caractéristique, les pliages complémentaires des bordures latérales des plaques supports de deux modules solaires destinées à être juxtaposées perpendiculairement au sens de la pente sont constitués, pour l'un, d'une aile à l'équerre orientée vers le haut, et pour l'autre, d'une nervure d'encastrement à section en U inversé.

Pour certains au moins des modules solaires, ces nervures d'encastrement comportent de préférence un premier tronçon de section constante, s'étendant à partir de la bordure supérieure de chaque plaque support, prolongé par un second tronçon de section constante et plus grande, s'étendant jusqu'à la bordure inférieure desdites plaques supports, de manière à permettre le recouvrement partiel des bordures supérieure et inférieure desdits modules juxtaposés dans le sens de la pente.

Selon encore une autre particularité, la bordure supérieure des plaques supports déborde au-dessus de l'encombrement périphérique du panneau associé.

Selon encore d'autres caractéristiques qui peuvent être envisagées isolément ou en combinaison :
- les bordures supérieures des plaques supports, qui sont destinées à former une partie de la bordure longitudinale supérieure de l'installation comportent un retour orienté vers le haut, muni de découpes adaptées pour coopérer avec le matériau de recouvrement adjacent ;
- les bordures inférieures des plaques supports, qui sont destinées à former une partie de la bordure longitudinale inférieure de l'installation comportent un retour orienté vers le bas, muni de découpes adaptées pour coopérer avec le matériau de recouvrement adjacent.

Dans une variante de réalisation, ces bordures inférieures des plaques supports qui forment la bordure longitudinale inférieure de l'installation viennent reposer sur une bavette d'étanchéité qui s'étend jusqu'au dessus du matériau de recouvrement juxtaposé, laquelle bavette repose en partie sur un support rapporté sur la structure support.
- les bordures latérales des plaques supports, qui sont destinées à former une partie des bordures latérales de l'installation comportent un pliage éventuellement muni de découpes, adapté(es) pour coopérer avec le matériau de recouvrement adjacent ;
- la face de dessous des plaques supports comporte un profilé rapporté, solidarisé par soudage, parallèlement aux bordures supérieure et inférieure desdites plaques supports, lequel profilé est adapté pour constituer une butée de positionnement du module solaire sur un élément de la structure support, par exemple un liteau ou une traverse ;
- la face de dessous des plaques supports comporte au moins un plot métallique soudé, lequel plot comporte un orifice taraudé apte à recevoir une tige filetée pour la fixation de profilés de solidarisation avec la structure support.

A titre de variante la face de dessous des plaques supports comporte au moins un rail de fixation, s'étendant parallèlement aux bordures supérieure et inférieure desdites plaques support, lequel rail coopère par encastrement avec un rail complémentaire fixé sur le dessus de la structure support.

L'invention concerne encore les modules solaires, constitués d'un panneau photovoltaïque ou thermique monté sur une embase métallique, pour une installation solaire telle que décrite ci-dessus.

L'invention sera encore illustrée, sans être aucunement limitée, par la description suivante, en association avec les dessins annexés dans lesquels :
- la figure 1 est une vue générale d'une installation solaire conforme à l'invention ;
- la figure 2 est une vue de dessus de l'un des modules solaires constitutifs de l'installation illustrée sur la figure 1 ;
- la figure 3 est une vue de face du module solaire illustré sur la figure 2 ;
- la figure 4 est une vue de côté du module solaire des figures 2 et 3 ;
- la figure 5 est une vue en perspective du module solaire des figures 2 à 4, orienté du côté de sa bordure inférieure ;
- la figure 6 est une vue en perspective du module solaire des figures 2 à 5, orienté du côté de sa bordure supérieure ;
- la figure 7 est une vue agrandie, en coupe selon le plan de coupe 7-7 de la figure 2 ;
- la figure 8 est une vue en perspective de la structure de butée ménagée du côté de la bordure inférieure des plaques supports ;
- la figure 9 est une vue en coupe selon le plan de coupe 9-9 de la figure 2, sur la structure de butée ;
- la figure 10 est une vue en perspective de la structure de verrouillage des panneaux sur leur plaque support ;
- la figure 11 est une vue en coupe selon le plan de coupe 11-11 de la figure 2, réalisé sur la structure de verrouillage ;
- la figure 12 est une vue partielle, en coupe, qui montre la juxtaposition de deux modules solaires, transversalement au sens de la pente ;
- la figure 13 est une vue en perspective qui montre la superposition partielle de deux plaques supports dans le sens de la pente, ces deux plaques supports étant ici dépourvues de leur panneau photovoltaïque, pour faciliter la compréhension ;
- la figure 14 est une vue partielle, en coupe, qui montre la juxtaposition de deux modules solaires disposés dans le sens de la pente ;
- la figure 15 est une vue partielle de la partie supérieure du module solaire destiné à équiper l'angle supérieur gauche de l'installation solaire conforme à l'invention ;
- la figure 16 est une vue en perspective d'un module destiné à équiper la bordure latérale droite de l'installation solaire selon l'invention ;
- la figure 17 est une vue agrandie, en coupe selon le plan de coupe 17-17 de la figure 16;
- la figure 18 est une vue partielle, du dessous de l'installation solaire, montrant les moyens de solidarisation avec la charpente de la toiture ;
- la figure 19 est une vue en coupe illustrant une variante des moyens de solidarisation de l'installation solaire avec la charpente de la toiture, ainsi qu'une variante des moyens assurant l'étanchéité avec le matériau de recouvrement de toiture, au niveau de la bordure inférieure de l'installation.

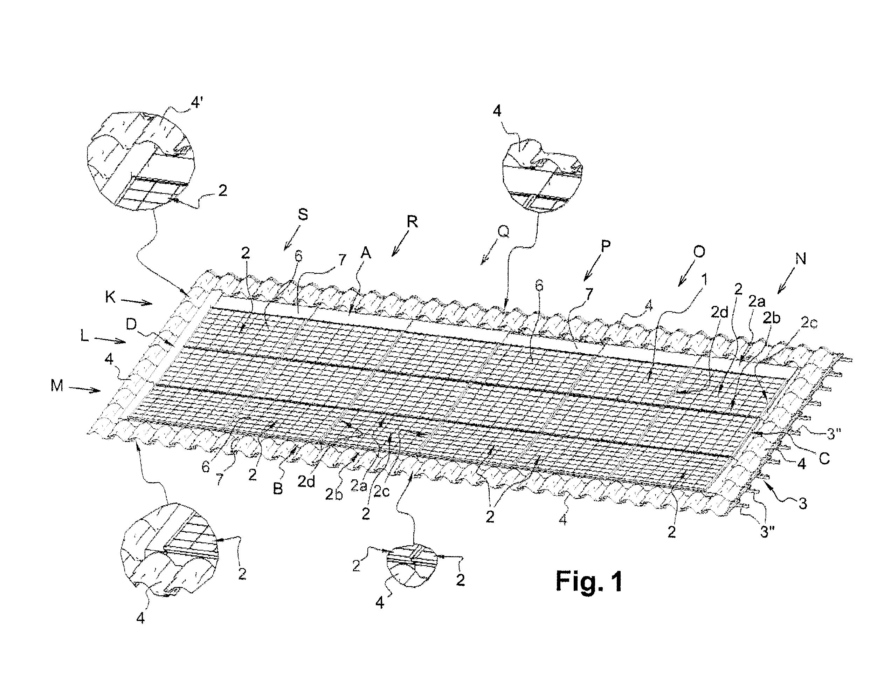

L'installation solaire 1 illustrée sur la figure 1 comprend une pluralité de modules solaires 2 juxtaposés en lignes et en colonnes.

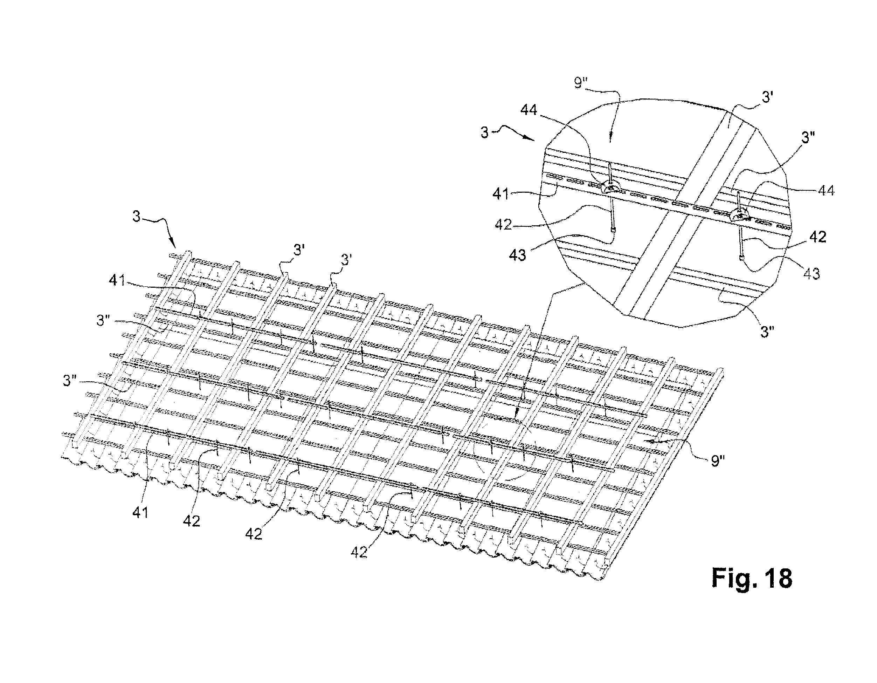

Cette installation 1 recouvre une partie de la surface d'une structure support en pente 3, en particulier une charpente de toiture comportant, ici, comme visibles sur la figure 18, des chevrons parallèles 3' orientés dans le sens de la pente, associés à des liteaux parallèles 3" disposés horizontalement (transversalement au sens de la pente).

Les modules 2 juxtaposés occupent une surface globalement rectangulaire, délimitée par un contour périphérique formé d'une bordure longitudinale supérieure A, d'une bordure longitudinale inférieure B, et de deux bordures latérales, l'une droite C et l'autre gauche D.

Sur le pourtour du contour périphérique A, B C, D de l'installation solaire 1, la charpente 3 est recouverte par un matériau 4 constitué ici de tuiles de type canal, mais qui peut consister en un autre matériau (ardoises, plaques ondulées ...) ou en d'autres types de tuiles.

Les modules solaires 2 ont chacun une forme générale carrée ou rectangulaire, et ils sont chacun délimités par une bordure haute 2a, une bordure basse 2b et deux bordures de côtés, l'une droite 2c et l'autre gauche 2d.

Dans l'exemple de réalisation illustré sur la figure 1, l'installation solaire est constituée de trois lignes horizontales de modules solaires 2 (une ligne supérieure K, une ligne centrale L et une ligne inférieure M), et de six colonnes de modules solaires 2 (une colonne de droite N, quatre colonnes centrales O, P, Q, R et une colonne de gauche S).

La bordure haute 2a des modules 2 de la ligne supérieure K correspond à une partie de la bordure longitudinale supérieure A de l'installation.

La bordure basse 2b des modules 2 de la ligne inférieure M correspond à une partie de la bordure longitudinale inférieure B de l'installation.

La bordure de côté droite 2c des modules 2 de la colonne de droite N correspond à une partie de la bordure latérale droite C de l'installation, et la bordure de côté gauche 2d des modules 2 de la colonne de gauche S correspond à une partie de la bordure latérale gauche D de l'installation.

Comme on va le détailler ci-après, les différents modules 2 sont juxtaposés en recouvrement de leurs bordures de côté 2c, 2d et/ou de leurs bordures haute et basse 2a, 2b, pour obtenir une étanchéité aux eaux pluviales, ceci, bien entendu, excepté au niveau du contour périphérique A, B, C, D de l'installation 1.

Au niveau de ce contour périphérique A, B, C, D, les bordures haute, basse et/ou de côtés 2a, 2b, 2c, 2d des modules 2, sont adaptées pour réaliser l'étanchéité aux eaux pluviales avec le matériau de recouvrement 4.

Pour cela, les modules solaires 2 sont chacun constitués d'un panneau solaire 6 en forme de plaque carrée ou rectangulaire, qui est monté sur une embase métallique 7 dont le contour est adapté pour obtenir les recouvrements d'étanchéité recherchés.

Cette embase métallique 7 comporte des moyens pour la fixation du panneau 6, et des moyens pour sa propre fixation sur la charpente 3.

Ces différents moyens de fixation sont de préférence identiques sur tous les modules 2 ; les panneaux solaires 6 sont également de préférence identiques sur tous les modules 2. En revanche, les bordures supérieure, inférieure et latérales des embases métalliques 7 sont adaptées, en fonction de la position du module 2 au sein de l'installation, pour obtenir les recouvrements d'étanchéité précités avec le ou les modules 2 juxtaposés, et/ou avec le matériau de recouvrement 4 juxtaposé. Les embases 7 sont donc identiques pour certaines et différentes pour d'autres.

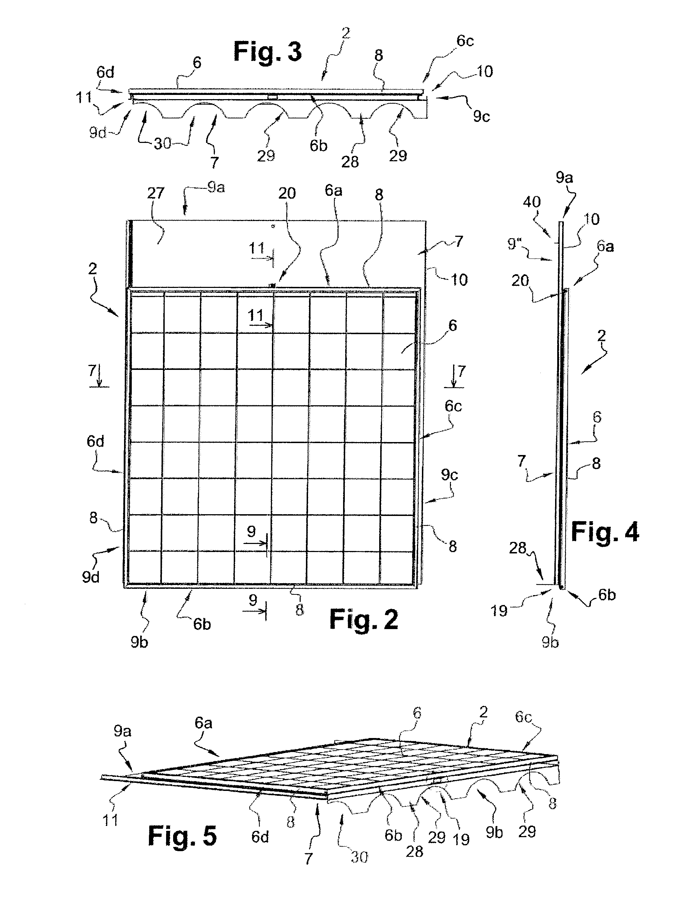

La structure de l'un des modules solaires 2, en l'occurrence de l'un des modules des colonnes centrales O, P, Q, R, situé sur la ligne inférieure M de l'installation solaire 1, est détaillée sur les figures 2 à 11.

Comme illustré en particulier sur les figures 2 à 7, ce module solaire 2 comprend un panneau solaire 6 de type photovoltaïque, fixé sur son embase métallique support 7.

Le panneau photovoltaïque 6 est ici en forme de plaque carrée intégrant des cellules photovoltaïques. Ce panneau 6, dont l'épaisseur est de l'ordre de 20 mm et dont la surface est de l'ordre de 1 m², est délimité par une bordure supérieure 6a, une bordure inférieure 6b et deux bordures latérales 6c, 6d.

Sur toute leur longueur, les quatre bordures 6a, 6b, 6c et 6d des panneaux 6 sont équipées de profilés rapportés 8, solidarisés par encastrement et collage, formant un cadre périphérique.

L'embase 7 comprend une plaque métallique rectangulaire 9, dont la surface est supérieure à celle des panneaux 6, réalisée par exemple en acier galvanisé de 1 à 2 mm d'épaisseur.

Cette plaque métallique 9 est délimitée par une bordure supérieure 9a et une bordure inférieure 9b, parallèles entre elles, et par deux bordures latérales 9c et 9d, également parallèles entre elles.

L'une des bordures latérales 9c de la plaque 9 est pliée pour former une aile à l'équerre 10 orientée vers le haut ; et l'autre bordure latérale 9d est également pliée pour former une nervure 11 à section en U inversé, c'est-à-dire ouverte vers le bas. L'aile 10 et la nervure 11 s'étendent sur toute la longueur des bordures latérales 9c et 9d de la plaque 9 ; la largeur de l'ouverture de la nervure 11 est supérieure à l'épaisseur de l'aile 10, et sa hauteur est supérieure à la hauteur de ladite aile 10.

Les pliages correspondants sont complémentaires de sorte que l'aile 10 d'un premier module 2 peut venir s'emboiter dans la nervure 11 d'un second module 2 identique, correctement juxtaposé latéralement, pour obtenir un recouvrement de leurs bordures latérales 9c et 9d, étanche aux eaux pluviales.

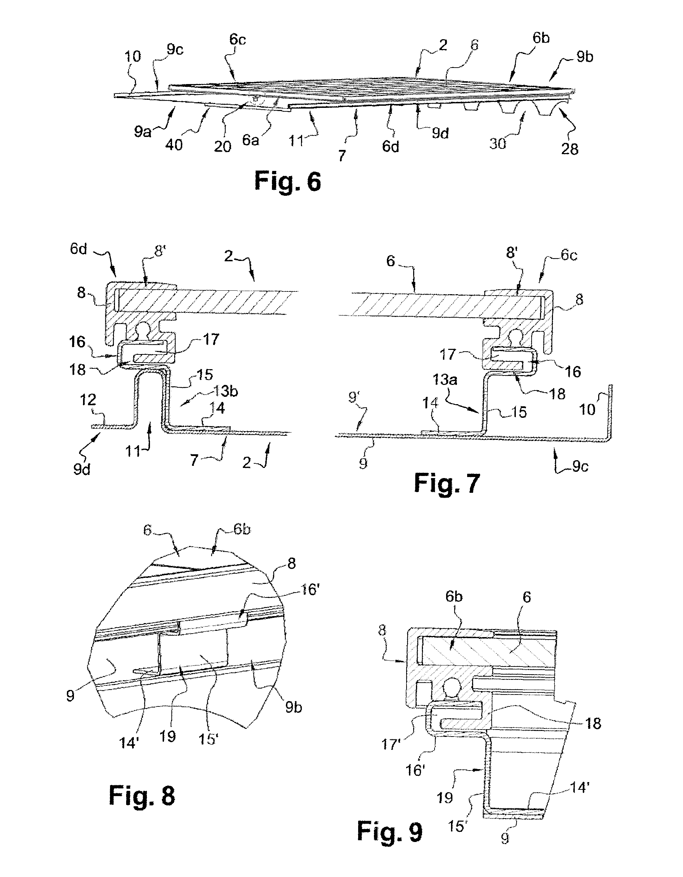

On remarque que la nervure 11 se prolonge par une aile 12 qui s'étend dans le plan de la plaque 9 (figure 7)

Entre la nervure 11 et l'aile 10, la face de dessus de la plaque 9 comporte deux rails latéraux 13a et 13b, disposés parallèlement aux bordures latérales 9c, 9d, qui permettent la fixation du panneau photovoltaïque 6.

Ces rails 13a et 13b se présentent sous la forme de profilés métalliques soudés contre la plaque support 9. Chaque rail 13a, 13b comporte une aile inférieure 14 qui est soudée sur la face de dessus 9' de la plaque 9 ; cette aile inférieure 14 se prolonge par une jambe 15 à l'équerre, elle-même prolongée par une structure 16 à section en U dont l'ouverture 17 est orientée latéralement, c'est-à-dire parallèlement au plan de la plaque support 9.

Ces rails 13a et 13b sont réalisés monoblocs par pliage d'une tôle d'acier galvanisé. Leurs ouvertures 17 sont orientées l'une vers l'autre pour former deux coulisses latérales parallèles permettant la réception des bordures de côtés 6c, 6d du panneau 6.

Plus précisément, comme on peut le voir sur la figure 7, les coulisses 17 des rails 13a et 13b assurent la réception d'une lèvre 18 à section en L, ménagée en saillie vers l'extérieur, à la base des profilés 8 qui équipent les bordures de côtés 6c, 6d du panneau 6. Ces lèvres 18 forment des coulisseaux aptes à venir s'emboîter par coulissement dans les rails 13a, 13b (et en particulier dans leurs ouvertures 17) ; elles sont ménagées dans l'encombrement du contour périphérique du panneau 6 associé, de manière à rendre la fixation invisible ou quasi-invisible, vue de dessus.

Les profilés 8 sont réalisés en métal (aluminium par exemple). Au-dessus de la lèvre 18, ils comportent un logement en U 8' pour leur encastrement sur les bordures du panneau 6.

Sur la figure 7, on remarque que le rail 13b de l'embase métallique 7 est positionné le long de la bordure latérale 9d de la plaque support 9, contre la nervure 11 (côté intérieur par rapport à cette dernière), de sorte que sa structure supérieure en U 16 vienne recouvrir cette nervure 11. De l'autre côté, le rail 13a est positionné le long de l'autre bordure latérale 9c de la plaque support 9, mais légèrement décalé vers l'intérieur par rapport à la lèvre 10 (parallèlement à celle-ci).

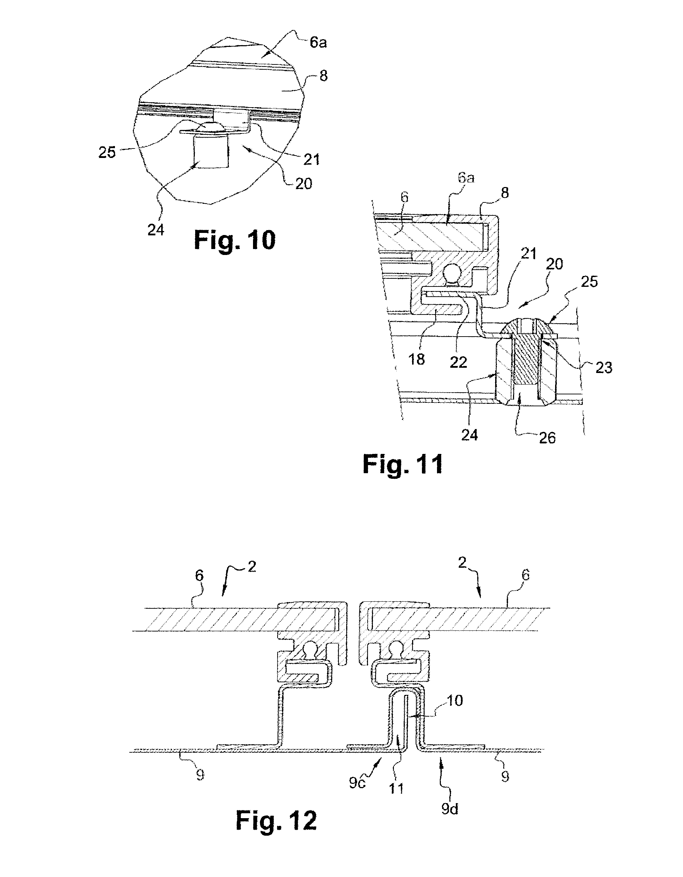

Le coulissement du panneau 6 équipé des profilés 8, sur les rails 13a, 13b s'effectue légèrement à force. Pour définir de manière précise le positionnement du panneau 6 par rapport à la plaque support 9, celle-ci comporte une structure de butée 19 en partie inférieure, détaillée sur les figures 8 et 9, et une structure de verrouillage 20 en partie supérieure, détaillée sur les figures 10 et 11.

Comme on peut le voir sur les figures 8 et 9, la structure de butée 19 est ménagée du côté de la bordure inférieure 9b de la plaque support 9, pour constituer un organe de blocage contre lequel vient en appui la bordure inférieure 6b du panneau 6 équipé de son profilé 8.

Cette structure de butée 19 consiste en un tronçon de profilé dont la section est identique à celle des rails latéraux 13a, 13b. Elle comprend donc une aile 14' soudée sur la face de dessus 9' de la plaque support 9, prolongée par une jambe 15' qui se termine par une structure en U 16' définissant un logement d'encastrement 17', lequel permet l'accueil de la lèvre 18 du profilé 8 en regard.

Ce tronçon de profilé peut avoir une longueur de quelques centimètres ; il est centré ou approximativement centré sur l'axe médian de la plaque support 9 (figure 5).

Après avoir fait coulisser le panneau 6 le long des rails 13a, 13b, à partir de sa bordure inférieure 6b engagée dans la partie supérieure desdits rails 13a, 13b, ladite bordure inférieure 6b arrive en contact avec la structure de butée 19 (par introduction de la lèvre 18 dans le logement 17'). Cette structure de butée 19 bloque alors le panneau 6 et elle empêche ses possibilités de déplacement dans le sens du coulissement de montage.

Plusieurs structures de butées identiques ou similaires peuvent être réparties entre les profilés 13a et 13b, à proximité de la bordure inférieure 9b de la plaque support 9.

Une fois le panneau 6 correctement positionné de la sorte, on active la structure de verrouillage supérieure 20. Cette structure de verrouillage 20 coopère avec la bordure supérieure 6a du panneau 6, de manière alors à empêcher toute possibilité de mouvement de ce dernier.

Comme on peut le voir sur les figures 2, 10 et 11, cette structure de verrouillage 20 est ménagée du côté de la bordure supérieure 9a de la plaque support 9. Elle consiste en un crochet 21 dont une aile 22 vient coopérer avec la lèvre 18 du profilé 8 équipant la bordure supérieure 6a en regard du panneau 6. Ce crochet 21 comporte un orifice 23 pour sa fixation amovible sur un plot métallique 24, au moyen d'une vis 25. La tige filetée de cette vis 24 vient s'implanter au sein d'un orifice taraudé 26 ménagé dans le plot métallique 24 ; ce plot 24 est soudé sur la face de dessus de la plaque support 9.

La vis 25 permet l'activation et la désactivation aisées de la structure de verrouillage 20. Si on souhaite limiter les possibilités de démontage du panneau 6, la tête de la vis 25 peut être soudée sur le plot 24, après positionnement correct du crochet 21.

Le panneau 6 est ainsi correctement verrouillé sur son embase support 7.

Comme on peut le voir en particulier sur la figure 2, sa bordure supérieure 6a est alors décalée vers le bas par rapport à la bordure supérieure 9a de la plaque support 9, de manière à ce que la partie supérieure 27 de cette plaque support 9 déborde au-dessus de l'encombrement dudit panneau 6.

D'autre part, la bordure inférieure 6b du panneau 6 déborde très légèrement de la bordure inférieure 9b de la plaque support 9 ; sa bordure de côté 6c s'étend légèrement en retrait vers l'intérieur par rapport à la bordure latérale 9c de la plaque 9, et sa bordure de côté 6d est pratiquement alignée avec la bordure de côté 9d de cette plaque support 9.

D'autre part, le panneau 6 est écarté de la plaque support 9, grâce à la présence des profilés 8 et des jambes 15 des profilés 13a, 13b, de manière à obtenir une bonne ventilation de sa face de dessous.

Comme on peut le voir sur les figures 3, 5 et 6, la bordure inférieure 9b, de la plaque support 9 comporte un pliage 28 en forme de retour à l'équerre, orienté vers le bas, dont la bordure inférieure 29 est découpée pour venir épouser le profil supérieur du matériau de recouvrement 4 (tuiles de type canal) qu'il est destiné à recouvrir.

En l'occurrence, cette bordure inférieure 29 découpée comporte une pluralité de réservations 30 en forme générale d'arcs de cercle adaptées pour venir épouser la partie en dôme des tuiles 4.

Un pliage 28 identique, avec des réservations 30 en arc de cercle, est prévu au niveau de la bordure inférieure 2b de tous les modules 2 de la ligne inférieure M de l'installation 1.

Les différents modules 2 de l'installation solaire 1 qui sont juxtaposés dans le sens perpendiculaire à la pente comportent des structures latérales complémentaires de type aile 10/nervure 11, telles que décrites ci-dessus, pour permettre leur assemblage de la manière illustrée sur la figure 12.

Sur cette figure 12, on remarque que la nervure 11 ménagée sur la bordure latérale 9d du module 2 situé à droite, vient s'emboîter sur l'aile verticale 10 de la bordure latérale 9c du module situé sur la gauche.

On obtient ainsi un recouvrement étanche des deux bordures juxtaposées 9c et 9d.

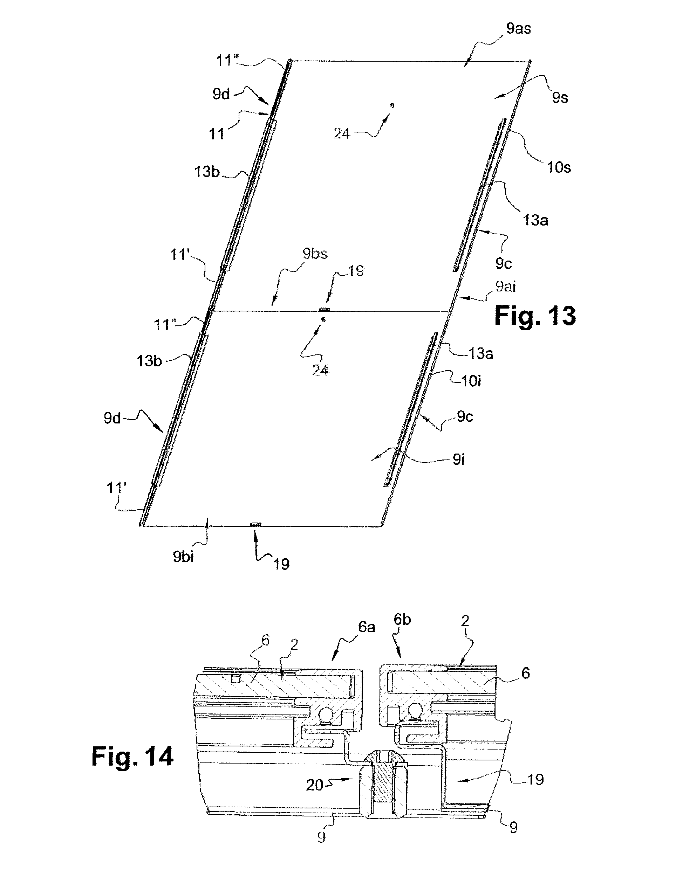

D'autre part, les plaques supports 9 des différents modules 2 de l'installation solaire 1 qui sont juxtaposées dans le sens de la pente viennent se recouvrir partiellement, selon le principe illustré sur la figure 13.

Cette figure 13 montre deux plaques supports 9 juxtaposées dans le sens de la pente (c'est-à-dire au niveau de l'une de leurs bordures inférieure et supérieure) dépourvues de leur panneau photovoltaïque 6 pour faciliter la compréhension.

La plaque supérieure est désignée par le repère 9s et la plaque inférieure par le repère 9i.

On remarque que la bordure inférieure 9bs de la plaque supérieure 9s vient recouvrir la bordure supérieure 9ai de la plaque inférieure 9i, sur quelques centimètres ou quelques dizaines de centimètres. Ce recouvrement s'effectue sur la zone libre supérieure 27, décrite ci-dessus, de la plaque inférieure 9i, en dehors de l'encombrement du panneau 6 destiné à lui être associé.

Pour permettre ce recouvrement, les nervures d'encastrement 11 qui sont ménagées sur la bordure latérale 9d des plaques 9 comportent un tronçon inférieur 11' (s'étendant jusqu'à la bordure inférieure 9b des plaques 9) qui est de section légèrement supérieure au tronçon restant 11 ", qui s'étend jusqu'à la bordure supérieure 9a. De la sorte, sur la zone de recouvrement des deux plaques 9s et 9i, au moins une partie du tronçon de nervure inférieur 11' de la plaque supérieure 9s vient s'emboîter sur l'extrémité supérieure du tronçon de nervure supérieur 11 " de la plaque inférieure 9i.

Au niveau de l'autre bordure de côté 9c, le léger jeu latéral qui existe entre les plaques 9s et 9i permet à l'aile 10s de la plaque supérieure 9s de venir se positionner côté intérieur par rapport à l'aile 10i de la plaque inférieure 9i.

Le positionnement des plaques 9 (et donc des modules 2) les unes par rapport aux autres dans le sens de la pente est défini par des butées adaptées, prévues au niveau de la face de dessous desdites plaques 9 et coopérant avec des éléments de traverse de la structure de toiture 3, en particulier les liteaux 3", comme expliqué plus loin.

Sur la figure 13, on remarque que les rails latéraux 13a et 13b ne s'étendent pas sur toute la longueur des plaques 9, ni sur toute la longueur des côtés des panneaux 6 associés.

On peut voir également les structures de butée précitées 19, et les plots métalliques soudés 24 des structures de verrouillage 20.

Comme représenté sur la figure 14, lorsque deux modules 2 sont juxtaposés dans le sens de la pente, au niveau de leur zone de recouvrement, la structure de butée 19 du module supérieur et la structure de verrouillage 20 du module inférieur sont très proches l'une de l'autre. La bordure inférieure 6b du panneau supérieur 6 est séparée simplement de quelques millimètres ou de quelques centimètres, de la bordure supérieure 6a du panneau inférieur 6.

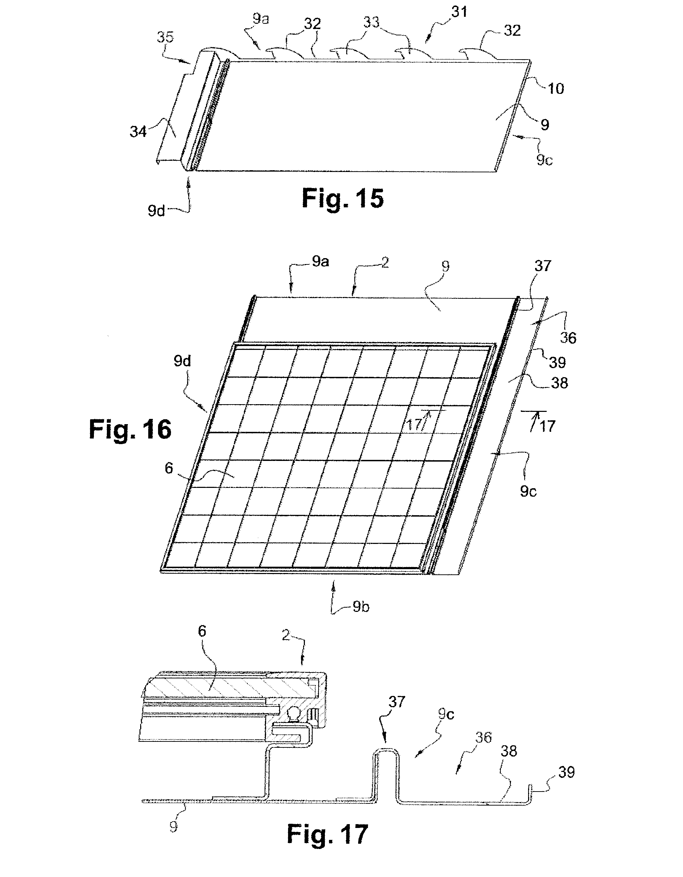

On a représenté sur la figure 15 la partie supérieure de la plaque support 9 du module solaire 2 adapté pour venir se positionner en haut et à gauche de l'installation 1 (c'est-à-dire sur la ligne K, colonne S).

On remarque ici que la bordure supérieure 9a de la plaque 9 comporte un pliage 31 en forme de retour à l'équerre, orienté vers le haut, dont la bordure supérieure 32 est découpée pour venir épouser le profil inférieur du matériau de recouvrement 4 sous lequel il est destiné à s'étendre.

En l'occurrence, cette bordure supérieure 32 comporte une pluralité de parties en saillie 33 dont le contour est en arc de cercle, adapté pour venir épouser la partie en creux des tuiles 4, afin de réaliser l'étanchéité aux eaux pluviales sur la bordure longitudinale A de l'installation.

Un pliage 31 identique, avec des parties en saillie 33, est prévu au niveau de la bordure supérieure 2a de tous les modules 2 de la ligne supérieure K de l'installation.

Sur la figure 15, on remarque encore le pliage 34 ménagé au niveau de la bordure latérale 9d de la plaque 9, dont la section est en forme générale de U inversé. Ce pliage en U 34 est adapté pour venir recouvrir une partie des tuiles 4 adjacentes, afin de réaliser l'étanchéité aux eaux pluviales sur la bordure latérale D de l'installation 1.

Ce pliage 34 peut être réalisé monobloc avec le reste de la plaque support 9 ; il peut aussi être formé à partir d'une plaque de tôle indépendante convenablement découpée/pliée, rapportée et soudée.

Un pliage 34 identique est prévu au niveau de la bordure de côté 2d de tous les modules 2 de la colonne de gauche S de l'installation.

Sur cette figure 15, on remarque la découpe 35 dans le pliage 34, au niveau de l'angle supérieur gauche de la plaque 9, prévu pour le passage de la tuile 4' adjacente (figure 1).

Les figures 16 et 17 montrent l'un des modules solaires 2 adapté pour venir se positionner au niveau de la colonne de droite N de l'installation 1.

La bordure latérale droite 9c de ce module 2 comporte une extension 36 apte à être recouverte par les tuiles adjacentes 4.

Cette extension 36 comporte une nervure 37 à section en U inversé, en saillie vers le haut, prolongée par un plateau 38 (situé dans le plan de la plaque 9), qui se termine par un retour 39 à l'équerre orienté vers le haut.

Les tuiles 4 adjacentes sont aptes à venir recouvrir une partie du plateau 38 et le retour à l'équerre d'extrémité 39, pour réaliser l'étanchéité aux eaux pluviales sur la bordure latérale C de l'installation.

L'extension 36 peut être réalisée monobloc avec le reste de la plaque support 9, ou être constituée (comme illustré sur la figure 17) d'une plaque de tôle convenablement découpée/pliée, rapportée et soudée.

Une telle extension 36 est prévue au niveau de la bordure de côté 2c de tous les modules 2 de la colonne de droite N de l'installation.

Les différents modules solaires 2 de l'installation 1 sont accrochés sur la structure de charpente 3 au moyen de profilés 40 en forme de cornières soudées sur la face de dessous 9" des plaques supports 9, transversalement au sens de la pente (c'est-à-dire parallèlement à leurs bordures supérieure et inférieure 9a, 9b).

Ces cornières en saillie 40 visibles sur les figures 4, et 6 sont ménagées du côté de la bordure supérieure 9a de chaque plaque 9 ; elles sont adaptées pour venir s'accrocher sur une traverse de la charpente 3, en particulier sur les liteaux 3".

Une fois correctement positionnés les uns par rapport aux autres, les modules solaires 2 constituant l'installation 1 sont fixés sur la structure support 3 au moyen de profilés de solidarisation 41, de la manière illustrée sur la figure 18.

Ces profilés 41 viennent prendre appui, ici, sous les chevrons 3' de la charpente 3, transversalement à ces derniers, et ils sont solidarisés avec les plaques supports 9 par l'intermédiaire de tiges filetées 42, dont l'une des extrémités vient se visser dans l'orifice taraudé d'un plot métallique 43 soudé sur la face de dessous 9" des plaques 9, et dont l'autre extrémité coopère avec un écrou 44 adapté (par exemple un écrou à ailettes du type à vissage rapide).

Les plots soudés 43 sont avantageusement identiques aux plots 24 précités, utilisés pour la butée de verrouillage 20.

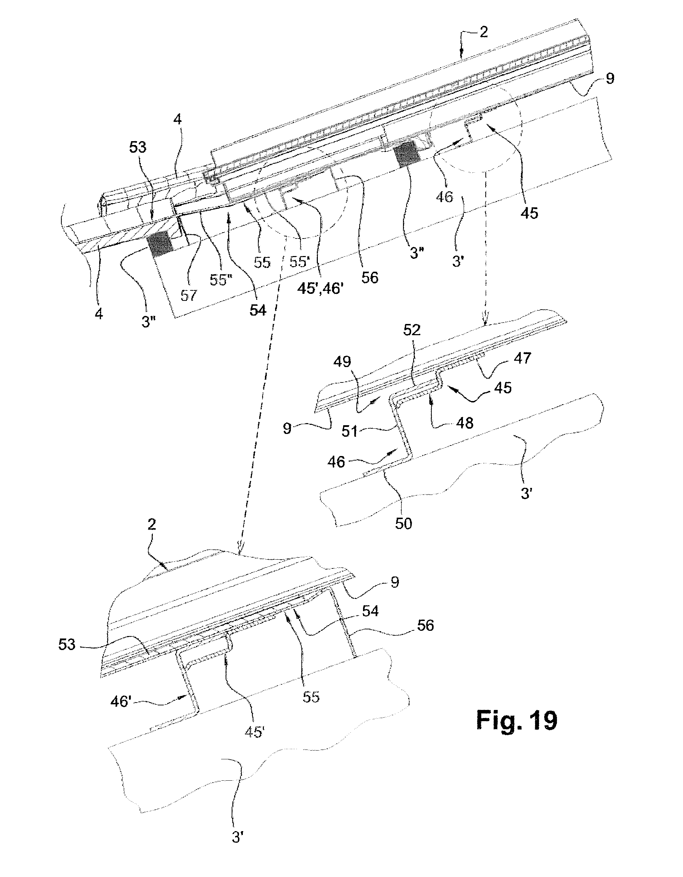

La figure 19 illustre une variante de réalisation pour la fixation des modules solaires 2 sur la charpente support 3.

Selon cette variante, des rails 45 sont soudés sur la face de dessous 9" des plaques supports 9, transversalement au sens de la pente, c'est-à-dire parallèlement à leurs bordures supérieure et inférieure 9a, 9b, destinés à coopérer avec des rails complémentaires 46 fixés sur les chevrons 3' (parallèlement aux liteaux 3").

Les rails 45 sont en forme de cornières, s'étendant sur toute ou pratiquement toute la largeur des modules 2 ; ils comportent un volet 47 soudé contre la plaque support 9, qui se prolonge par une structure 48 à section en L, dont l'ouverture 49 est orientée vers le bas de la pente.

Les rails complémentaires 46 sont également en forme de cornières ; ils comportent un volet 50 pour la fixation sur les chevrons 3', par exemple au moyen de vis, qui se prolonge par un pied 51 suivi d'une aile d'extrémité 52 orientée vers le haut de la pente.

Deux ou trois structures de rails complémentaires 45-46 sont prévues pour la fixation de chaque module solaire 2.

La fixation des modules 2 est obtenue en positionnant les ouvertures 49 des rails 45 face aux ailes 52 des rails 46, puis en faisant coulisser le module 2 vers le bas pour assurer l'encastrement ou l'emboîtement desdites ailes 52 au sein desdites ouvertures 49, comme illustré sur la figure 19.

Les rails 45, 46 sont adaptés pour obtenir un emboîtement serré, limitant le jeu ; la hauteur de ces rails 45, 46 est également adaptée au type de support 3 (voliges, liteaux...).

Ce type de fixation s'avère simple et présente une bonne tenue à l'arrachement.

La figure 19 illustre encore une variante de réalisation pour réaliser l'étanchéité avec le matériau de recouvrement 4, au niveau de la bordure longitudinale inférieure B de l'installation (en lieu et place du pliage 28 décrit précédemment).

Ici, l'étanchéité est réalisée au moyen d'une bavette 53 (type Wakaflex (marque déposée), par exemple), dont l'extrémité supérieure est positionnée sous la bordure inférieure des modules 2 de la ligne inférieure M, et dont l'extrémité inférieure vient recouvrir une partie du matériau de recouvrement 4 juxtaposé (en l'occurrence des tuiles).

Pour assurer son positionnement correct, l'extrémité supérieure de la bavette 53 est portée par un support rapporté 54, sur lequel vient aussi reposer la bordure inférieure du module 2 sus-jacent.

Ce support 54 consiste en une tôle pliée à section en U comportant une platine supérieure 55 dont la bordure située côté haut de la pente se prolonge par un volet 56 orienté vers le bas, et dont la bordure située côté bas de la pente se prolonge par un volet 57, également orienté vers le bas.

Les deux volets 56 et 57 s'étendent transversalement au sens de la pente ; leur bordure inférieure vient reposer sur la structure support 3, et plus particulièrement sur les chevrons 3'.

Le volet 57 est destiné à venir se positionner en butée contre l'extrémité supérieure des tuiles 4 juxtaposées, ou juste à proximité. Le volet 56 est de son côté positionné sous la bordure inférieure des modules solaires 2.

La platine 55 est en forme de dièdre, avec une partie supérieure 55' (ici parallèle aux chevrons 3') sur laquelle vient reposer l'extrémité inférieure du module solaire 2, et une partie inférieure remontante 55", adaptée pour rattraper la hauteur du matériau de recouvrement 4. La hauteur du volet 57 est ici supérieure à la hauteur du volet 56.

Ce support 54 est fixé sur la structure support 3 au moyen de rails 45', 46' identiques ou similaires aux rails 45, 46 décrits ci-dessus, utilisés pour la fixation des modules 2.

Le support 54 est avantageusement réalisé en plusieurs tronçons juxtaposés sur la bordure inférieure de l'installation solaire. Ces tronçons peuvent chacun correspondre à la largeur d'un module solaire 2.

Comme illustré sur la figure 19, la bavette d'étanchéité 53 s'étend depuis la partie supérieure 55' de la platine 55, jusqu'au-dessus des tuiles 4 en regard. Le support 54 assure ainsi un bon appui de la bavette 53 qui peut de son côté assurer une bonne évacuation des eaux pluviales ruisselant sur les plaques supports 9 des modules 2, en direction du dessus du matériau de recouvrement 4.

Eventuellement, une fois l'ensemble des modules correctement posés, des joints d'étanchéité peuvent être positionnés longitudinalement et transversalement entre les différents panneaux solaires 6 juxtaposés.

On obtient ainsi un ensemble étanche, facile à poser, particulièrement adapté à recevoir des panneaux photovoltaïques, mais qui peut également être appliqué aux panneaux de type thermique.

L'étanchéité est obtenue sans ajout de matière telle que le plomb ou le mastic, et la face de dessous des différents panneaux est correctement ventilée.

Les différents modules solaires 2 sont intégralement préfabriqués en usine, en fonction des dimensions souhaitées de l'installation, et du type de matériau de recouvrement. La pose s'effectue sans nécessiter d'outils particuliers et sans avoir besoin de découper le matériau de recouvrement.

Le poids de l'ensemble est réduit et les modules solaires sont faciles à remplacer.

## Revendications

1. Installation solaire destinée à être posée sur une partie de la surface d'une structure support (3) en pente, et délimitée par un contour périphérique formé d'une bordure longitudinale supérieure (A), d'une bordure longitudinale inférieure (B) et de deux bordures latérales (C, D), laquelle installation (1) est destinée à être bordée, sur une partie au moins dudit contour périphérique (A, B, C, D), par un matériau (4) de recouvrement de ladite structure support (3), tel que des tuiles ou des ardoises par exemple, et laquelle installation solaire (1) comprend une pluralité de modules solaires (2), chacun de forme générale carrée ou rectangulaire, délimités par une bordure haute (2a), une bordure basse (2b) et deux bordures de côtés (2c, 2d), lesquels modules solaires (2) sont juxtaposés en recouvrement de leurs bordures de côtés (2c, 2d) et/ou de leurs bordures haute et basse (2a, 2b), excepté au niveau dudit contour périphérique de l'installation (A, B, C, D), **caractérisée en ce que** lesdits modules solaires (2) sont constitués chacun d'un panneau photovoltaïque (6) en forme de plaque carrée ou rectangulaire, lequel panneau (6), délimité par une bordure supérieure (6a), une bordure inférieure (6b) et deux bordures latérales (6c, 6d), est monté sur une embase métallique (7) comprenant une plaque support (9) découpée et pliée, de forme générale carrée ou rectangulaire, délimitée par une bordure supérieure (9a), une bordure inférieure (9b) et deux bordures latérales (9c, 9d),
- lesdites bordures latérales (9c, 9d) desdites plaques supports (9) de deux modules (2) destinés à être juxtaposés perpendiculairement au sens de la pente comportant des pliages complémentaires (10, 11) pour permettre leur recouvrement et obtenir un emboîtement étanche aux eaux pluviales,
- lesdites bordures supérieure (9a) et inférieure (9b) des plaques supports (9) de deux modules (2) destinés à être juxtaposés dans le sens de la pente étant aptes à venir se recouvrir de manière étanche aux eaux pluviales,
- les bordures supérieure (9a), inférieure (9b) et latérales (9c, 9d) desdites plaques supports (9), destinées à former une partie du contour périphérique de ladite installation (A, B, C, D), comportant des découpes et/ou pliages (28, 31, 34, 36) adaptés audit matériau de recouvrement (4) destiné à leur être associé, pour obtenir une étanchéité aux eaux pluviales,
- la face de dessus (9') de chacune desdites plaques supports (9) comportant des structures rapportées et soudées (13a, 13b), pour la fixation d'un panneau photovoltaïque ou thermique (6), et
- la face de dessous (9") de chacune desdites plaques supports (9) comportant des structures rapportées et soudées (40, 43) pour la fixation dudit module (2) sur ladite structure support (3) en pente.

2. Installation solaire selon la revendication 1, **caractérisée en ce que** lesdites structures rapportées et soudées sur la face de dessus (9') de chaque plaque support (9) pour la fixation d'un panneau photovoltaïque ou thermique (6) consistent en :
- deux rails latéraux (13a, 13b) disposés parallèlement aux bordures latérales (9c, 9d) de ladite plaque support (9), munis de moyens (16) pour la réception des bordures latérales (6c, 6d) dudit panneau photovoltaïque ou thermique (6),
- une structure de butée (19), ménagée du côté de la bordure inférieure (9b) de ladite plaque support (9), pour constituer un appui pour la bordure inférieure (6b) dudit panneau (6), et
- une structure de verrouillage (20), ménagée du côté de la bordure supérieure (9a) de ladite plaque support (9), pour constituer une butée de blocage pour la bordure supérieure (6a) de ce panneau (6).

3. Installation solaire selon la revendication 2, **caractérisée en ce que** les deux rails latéraux (13a, 13b) des plaques supports (9) consistent en des profilés métalliques soudés, comprenant chacun une aile inférieure (14) de solidarisation avec ladite plaque (9), prolongée par une jambe à l'équerre (15) dont la partie supérieure se prolonge elle-même par une structure (16) à section en U dont l'ouverture (17) est orientée en direction de l'autre rail (13a, 13b), pour former des coulisses latérales permettant la réception des bordures latérales (6c, 6d) du panneau photovoltaïque ou thermique (6) associé.

4. installation solaire selon la revendication 3, **caractérisée en ce que** la structure de butée inférieure (19) consiste en au moins un tronçon de profilé dont la section est identique à celle des rails latéraux (13a, 13b), lequel tronçon de profilé (19) est soudé sur la face de dessus (9') de la plaque support (9), l'ouverture (17') de sa structure à section en U (16') étant orientée de manière à permettre l'encastrement de la bordure inférieure (6b) du panneau photovoltaïque ou thermique (6) associé.

5. Installation solaire selon l'une quelconque des revendications 2 à 4, **caractérisée en ce que** la structure de verrouillage supérieure (20) consiste en un plot métallique (24) soudé sur la face de dessus (9') de la plaque support (9), lequel plot (24) comporte un orifice taraudé (26) apte à recevoir une vis (25) de fixation d'un crochet rapporté (21) venant coopérer avec la bordure supérieure (6a) du panneau photovoltaïque ou thermique (6) associé, en vue d'assurer le verrouillage de ce dernier une fois en position, logé dans les rails latéraux (13a, 13b) de réception et en appui contre la structure de butée inférieure (19).

6. Installation solaire selon l'une quelconque des revendications 2 à 5, **caractérisée en ce que** les panneaux photovoltaïques ou thermiques (6) sont équipés de profilés rapportés (8), encastrés sur leurs bordures latérales (6c, 6d), supérieure (6a) et inférieure (6b), lesquels profilés (8) comportent une lèvre (18) à section en L, formant coulisseau, en saillie vers l'extérieur, apte à venir s'emboîter par coulissement dans les rails latéraux (13a, 13b) de la plaque support (9) et éventuellement apte à coopérer avec la structure de butée inférieure (19) et avec la structure de verrouillage supérieure (20).

7. Installation solaire selon la revendication 6, **caractérisée en ce que** lesdites lèvres (18) à section en L sont ménagées à la base des profilés rapportés (8), sous le panneau associé (6) et dans l'encombrement du contour périphérique de ce dernier.

8. Installation solaire selon l'une quelconque des revendications 1 à 7, **caractérisée en ce que** les pliages complémentaires des bordures latérales (9c, 9d) des plaques supports (9) de deux modules solaires (2) destinés à être juxtaposés perpendiculairement au sens de la pente sont constitués, pour l'un, d'une aile à l'équerre (10) orientée vers le haut, et pour l'autre, d'une nervure d'encastrement (11) à section en U inversé.

9. Installation solaire selon la revendication 8, **caractérisée en ce que**, pour certains au moins des modules solaires (2), lesdites nervures d'encastrement (11) comportent un premier tronçon (11') de section constante s'étendant à partir de la bordure supérieure (9a) de chaque plaque support (9), prolongé par un second tronçon (11 ") de section constante et plus grande, s'étendant jusqu'à la bordure inférieure (9b) desdites plaques supports (9), pour permettre le recouvrement partiel des bordures supérieure (2a) et inférieure (2b) desdits modules (2) juxtaposés dans le sens de la pente.

10. Installation solaire selon l'une quelconque des revendications 1 à 9, **caractérisée en ce que** la bordure supérieure (9a) des plaques supports (9) déborde au-dessus de l'encombrement périphérique du panneau (6) associé.

11. Installation solaire selon l'une quelconque des revendications 1 à 10, **caractérisée en ce que** les bordures supérieures (9a) des plaques supports (9) qui sont destinées à former une partie de la bordure longitudinale supérieure (A) de l'installation (1), comportent un retour (31) orienté vers le haut, muni de découpes (33) adaptées pour coopérer avec le matériau de recouvrement adjacent (4).

12. Installation solaire selon l'une quelconque des revendications 1 à 11, **caractérisée en ce que** les bordures inférieures (9b) des plaques supports (9), qui sont destinées à former une partie de la bordure longitudinale inférieure de l'installation (B) comportent un retour (28) orienté vers le bas, muni de découpes (30) adaptées pour coopérer avec le matériau de recouvrement adjacent (4).

13. Installation solaire selon l'une quelconque des revendications 1 à 11, **caractérisée en ce que** les bordures inférieures (9b) des plaques supports (9) qui forment la bordure longitudinale inférieure de l'installation (B), viennent reposer sur une bavette d'étanchéité (53) qui s'étend jusqu'au dessus du matériau de recouvrement juxtaposé (4), laquelle bavette (53) repose en partie sur un support (54) rapporté sur la structure support (3).

14. Installation solaire selon l'une quelconque des revendications 1 à 13, **caractérisée en ce que** les bordures latérales (9c, 9d) des plaques supports (9), qui sont destinées à former une partie des bordures latérales de l'installation (C, D), comportent un pliage éventuellement muni de découpes (34, 35, 36, 37, 38, 39), adapté(es) pour coopérer avec le matériau de recouvrement adjacent (4).

15. Installation solaire selon l'une quelconque des revendications 1 à 14, **caractérisée en ce que** la face de dessous (9") des plaques supports (9) comporte un profilé rapporté (40), solidarisé par soudage parallèlement aux bordures supérieure (9a) et inférieure (9b) desdites plaques supports (9), lequel profilé (40) est adapté pour constituer une butée de positionnement du module solaire (2) sur un élément de la structure support (3), par exemple un liteau (3") ou une traverse.

16. Installation solaire selon l'une quelconque des revendications 1 à 15, **caractérisée en ce que** la face de dessous (9") des plaques supports (9) comporte au moins un plot métallique soudé (43), lequel plot (43) comporte un orifice taraudé apte à recevoir une tige filetée (42) pour la fixation de profilés (41) de solidarisation avec la structure support (3).

17. Installation solaire selon l'une quelconque des revendications 1 à 15, **caractérisée en ce que** la face de dessous (9") des plaques supports (9) comporte au moins un rail de fixation (45), s'étendant parallèlement aux bordures supérieure (9a) et inférieure (9b), lequel rail (45) coopère par encastrement avec un rail complémentaire (46) fixé sur le dessus de la structure support (3).

18. Module solaire constitué d'un panneau photovoltaïque (6) monté sur une embase métallique (7) pour une installation solaire (1) selon l'une quelconque des revendications 1 à 17.
